# EUROPEAN PATENT APPLICATION

(11) **EP 1 895 272 A2**
(43) Date of publication of application: **05.03.2008**
(21) Application number: 07114977.7
(22) Date of filing: 24.08.2007
(51) Int. Cl.: G01C 21/32

(54) **Data management system and method for updating data**

(30) Priority: 29.08.2006 JP 2006232205
(71) Applicant: Aisin AW Co., Ltd., Fujii-cho Anjo-shi, Aichi 444-1192 (JP)
(72) Inventor: Kobayashi, Yukihiko, Okazaki-shi Aichi 444-8564 (JP)
(74) Representative: TBK-Patent

(57) **Abstract**

With a retrieval key to specify a category included in information data, the information data is updated by accepting an entry of an updating file which contains updating information data for updating the information data subject to update; extracting the information data subject to update from an information data frame; updating the extracted information data with the updating information data contained in the updating file: extracting pertinent data in the category specified by the retrieval key contained in the information data subject to update from a pertinent data frame; and updating the extracted pertinent data with the updating information data contained in the updating file.

## Description

The present invention relates to a data management system having a storage medium which stores a plurality of information data in an information data frame as well as pertinent data for specifying the information data in a pertinent data frame for each category specified by a retrieval key, and a data updating section for updating data stored in the aforementioned storage medium by reading and writing desired data from and in the aforementioned storage medium. The present invention also relates to a method for updating data stored in the aforementioned storage medium by reading and writing desired data from and in the aforementioned storage medium.

Navigation devices, which provide an optimal course guidance to a destination, having a storage medium which stores map data related to maps and displaying the map data which is read out from the storage medium on a monitor together with a position of the vehicle which is detected accordingly by a GPS receiver and such, with a built-in hard disk of a large storage capacity as a storage medium, have been put into practical use in recent years.

The navigation device with such a hard disk as a storage medium is configured to update the data stored in the aforementioned storage medium, not by replacing discs as in the cases of DVD, CD-ROM and such, but by accepting an entry of an updating file via, for example, a medium of a small capacity or a predefined communication network such as a mobile telephone or the like and reading and writing desired data from and in the storage medium based on the updating file.

With such a navigation device, when updating data stored in a storage medium, as a large amount of data is stored in the storage medium in the record units which include a plurality of fields, the data is updated, not by updating the entire data stored in the aforementioned storage medium, but by updating data in the aforementioned record units which is so-called differential updating (refer to Japanese Patent Application Publication No. JP-A-2004-287705, for example).

More specifically, in the aforementioned differential updating, an updating file having the entire data of new records which contains records that require an updating of a mere single byte or more as the subject to update is created and the navigation device updates the data stored in the storage medium by way of accepting the entry of the updating file and renewing the entire records subject to update stored in the storage medium by the data of entire records contained in the updating file. Therefore, the amount of data in the aforementioned updating file becomes small as the records not required to update are not included, and the volume of communication and memory capacity for an entry of the updating file and an updating time are reduced.

Another navigation device which is configured to give search guidance of spot information, other than the optimal course guidance described above, by storing information data relating to spot information in a storage medium and displaying the information data retrieved from the storage medium on a monitor is publicly known (refer to Japanese Patent Application Publication No. JP-A-2005-25672 and Japanese Industrial Standards (JIS) D-0810, for example). More specifically, with a navigation device which provides search guidance of spot information, in the aforementioned storage medium, a plurality of information data are stored in an information data frame as well as pertinent data to specify the information data in a pertinent data frame for each category specified by retrieval keys. By the entry of retrieval keys such as a name pronunciation, telephone number, and address of a spot, pertinent data in the category specified by the retrieval keys entered is extracted successively from the aforementioned pertinent data frame and the name and such of the spot contained in the extracted pertinent data are displayed on a monitor. Further, when one pertinent data out of the pertinent data displayed is selected, an address of information data contained in the selected pertinent data is referenced, the information data specified by the pertinent data is extracted successively from the aforementioned information data frame, and the detailed information of the spot and such contained in the extracted information data is displayed on the monitor.

In a navigation device which provides such search guidance of spot information, when updating the aforementioned pertinent data and the aforementioned information data, differential updating as described above may also be used.

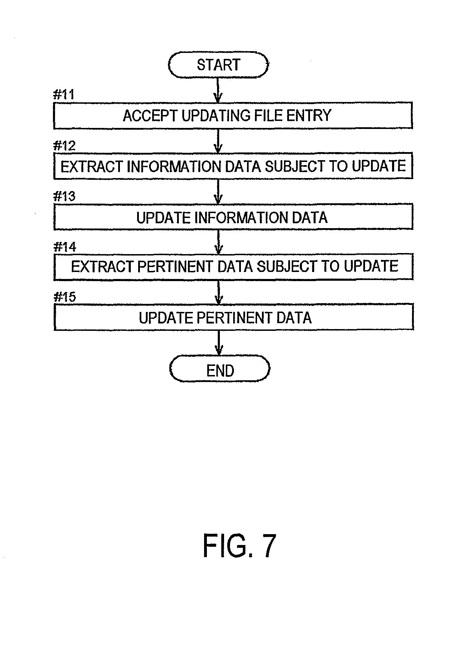

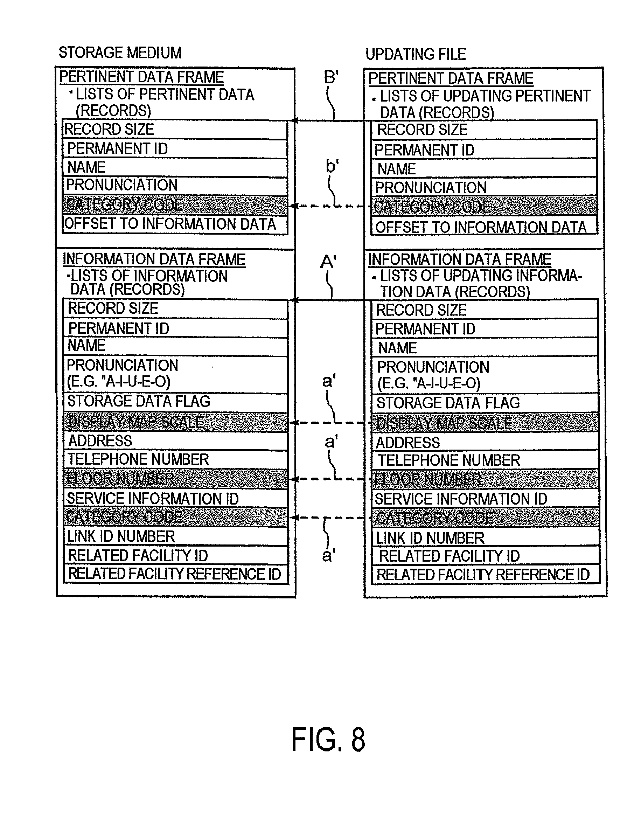

More specifically, the navigation device which updates pertinent data and information data by the aforementioned differential updating, as indicated in FIGS. 7 and 8, accepts at first the entry of an updating file which contains both the entire pertinent data frame in which the latest updating pertinent data to be stored in the storage medium are stored and the entire information data frame in which the latest updating information data to be stored in the storage medium are stored (step #11). Then, as indicated by the arrow A' in FIG. 8, the navigation device extracts information data subject to update from the information data frame stored in the storage medium (step #12) and, as indicated by the arrows a' in FIG. 8, updates the extracted information data with the updating information data contained in the aforementioned updating file (step #13). Similarly, as indicated by the arrow B' in FIG. 8, the navigation device extracts pertinent data subject to update from the pertinent data frame stored in the storage medium (step #14) and, as indicated by the arrow b' in FIG. 8, updates the extracted pertinent data with the updating pertinent data contained in the aforementioned updating file (step #15).

In the navigation device which provides the search guidance of spot information as described above, the amount of pertinent data and information data stored in the storage medium increases in accordance with an improvement of performance, and further, by frequent changes of spot information, the enormous amount of data needs to be updated frequently.

Therefore, there have been problems in that the capacity of an updating file which contains both new pertinent data and information data becomes large, and the volume of communication and the memory capacity for an entry of the updating file as well as an updating time increase. A further reduction in the capacity of such updating file is desired.

An advantage of some aspects of the present invention is, in a data management system having a storage medium which stores a plurality of information data in an information data frame as well as pertinent data for specifying the information data in a pertinent data frame for each category specified by retrieval keys and a data updating section for updating data stored in the aforementioned storage medium by reading and writing desired data from and in the aforementioned storage medium, to provide the technology to reduce the capacity of an updating file used for updating as much as possible.

In consideration of the above-described points, a data management system according to a first aspect of the present invention includes: a storage medium storing a plurality of information data in an information data frame and storing pertinent data specifying the information data in a pertinent data frame for each individual category specified by a retrieval key, the information data including the retrieval key to specify the category; an updating unit updating data stored in the storage medium by reading and writing desired data from and in the storage medium; and an updating file input terminal accepting an entry of an updating file containing updating information data for updating information data subject to update. The updating unit includes: an information data updating section extracting the information data subject to update from the information data frame, and updating the extracted information data with the updating information data contained in the updating file; and a pertinent data updating section extracting the pertinent data in the category specified by the retrieval key contained in the information data subject to update from the pertinent data frame, and updating the extracted pertinent data with the updating information data contained in the updating file.

According to the first aspect, the information data subject to update stored in the information data frame included in the storage medium is updated with the updating information data contained in the updating file, while the pertinent data subject to update stored in the pertinent data frame included in the storage medium is updated with the same updating information data as that used for updating the information data. Therefore, even when both the information data and the pertinent data need to be updated, the amount of data in the updating file can be reduced as the file does not need the pertinent data frame to be used only for updating the pertinent data, and thus the volume of communication and memory capacity for an entry of the updating file and an updating time can be reduced, for example.

Specifically, the pertinent data updating section references the retrieval key contained in the information data subject to update updated by the information data updating section, and extracts the pertinent data in the category specified by the referenced retrieval key as the pertinent data subject to update. Therefore, the extracted pertinent data subject to update is updated with the updating information data corresponding to the pertinent data.

According to a second aspect of the present invention, the updating file input terminal is configured to be able to receive the updating file via a communication line in the data management system in addition to the feature according to the first aspect.

According to the second aspect, the updating file input terminal can easily and frequently receive an entry of the updating file to be used for updating the information data and the pertinent data from, for example, a server that manages the information data stored in the storage medium via the communication line.

According to a third aspect of the present invention, the category has a hierarchical structure in the data management system in addition to the feature according to the first or the second aspect.

According to the third aspect, even when the category has a hierarchical structure, the pertinent data updating section can easily and swiftly specify the category of the pertinent data subject to update and extract the pertinent data subject to update by using the retrieval key contained in the information data subject to update.

According to a fourth aspect of the present invention, the system is configured as a navigation device storing data related to spot information as the information data in the storage medium in the data management system in addition to the feature according to any one of the first to the third aspect.

According to the fourth aspect, even when the system is configured as a navigation device storing data related to spot information as the information data in the storage medium and displaying the information data obtained from the storage medium on a monitor so as to provide search guidance of the spot information, the information data and the pertinent data stored in the storage medium can be updated by using the updating file with a small amount of data without the pertinent data frame to be used only for updating the pertinent data.

According to a fifth aspect of the present invention, the retrieval key is at least one of a name pronunciation, telephone number, and address of the spot with the data management system in addition to the feature according to any one of the first to the fourth aspect.

According to the fifth aspect, with an entry of the retrieval key that is at least one of a name pronunciation, telephone number, and address of the spot, the pertinent data subject to update can be extracted with at least one of the name pronunciation, telephone number, and address of the spot so as to provide search guidance of the spot information by extracting the pertinent data in the category specified by the entered retrieval key and the information data specified by the pertinent data.

In consideration of the above-described points, a method for updating data according to a sixth aspect of the present invention is executable by the data management system according to any one of the preceding aspects. In other words, it is a method for updating data stored in a storage medium storing a plurality of information data in an information data frame and storing pertinent data specifying the information data in a pertinent data frame for each category specified by a retrieval key by reading and writing desired data from and in the storage medium, wherein the information data include the retrieval key to specify the category, and the method includes: inputting an updating file by accepting an entry of the updating file containing updating information data for updating information data subject to update; updating the information data by extracting the information data subject to update from the information data frame, and by updating the extracted information data with the updating information data contained in the updating file; and updating the pertinent data by extracting the pertinent data in the category specified by the retrieval key contained in the information data subject to update from the pertinent data frame, and by updating the extracted pertinent data with the updating information data contained in the updating file.

According to the sixth aspect, the information data subject to update stored in the information data frame included in the storage medium is updated with the updating information data contained in the updating file in updating the information data, while the pertinent data subject to update stored in the pertinent data frame included in the storage medium is updated with the same updating information data as that used for updating the information data in updating the pertinent data. Therefore, even when both the information data and the pertinent data need to be updated, the amount of data in the updating file can be reduced as the file does not need the pertinent data frame to be used only for updating the pertinent data, and thus the volume of communication and memory capacity for an entry of the updating file and an updating time can be reduced, for example.
FIG. 1 is a block diagram illustrating an outlined configuration of a navigation device in accordance with a first embodiment of the present invention;
FIG. 2 is an illustration showing a data structure of a storage medium and a flow of information search guidance in accordance with the first embodiment;
FIG. 3 is a flowchart of the process of data updating method in accordance with the first embodiment;
FIG. 4 is an illustration showing an updating flow of a storage medium by using an updating file in accordance with the first embodiment;
FIG. 5 is an illustration showing an updating flow of a storage medium using an updating file in accordance with another preferred embodiment;
FIG. 6 is an illustration showing an updating flow of a storage medium using an updating file in accordance with yet another preferred embodiment;
FIG. 7 is a flowchart of the process of a related-art data updating method; and
FIG. 8 is an illustration showing an updating flow of a related-art storage medium using an updating file.

Embodiments of a data management system and a method for updating data of the present invention which is applied to a navigation device configured as the data management system and the method for updating data performed by the navigation device will be described with reference to the drawings.

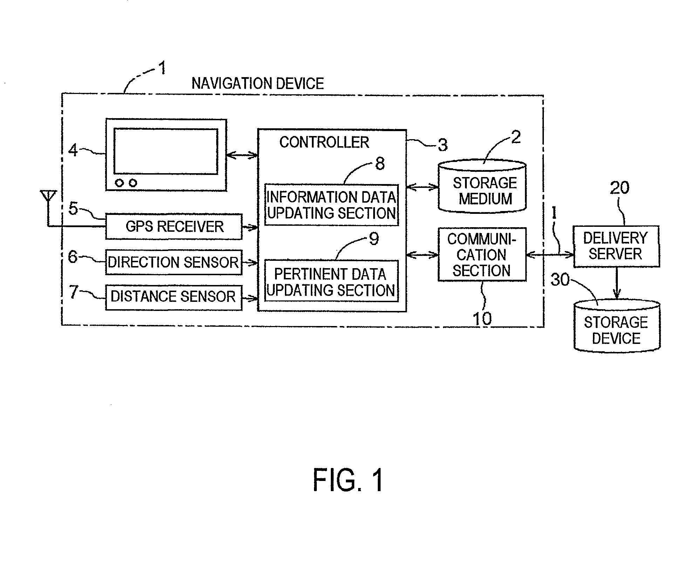

A navigation device 1 indicated in FIG. 1 which is installed in a vehicle as publicly known is composed of various function sections. The sections perform various processes according to the data entered through a controller 3 which includes a CPU. The sections are implemented by hardware, software (programs) or a combination of the both.

The navigation device 1 has a built-in rewritable storage medium 2 such as a hard disk in which map data relating to maps, information data relating to spot information and such are stored. The storage medium 2 is structured similar to a hard disk drive so as to function as both a drive device and a hardware configuration that drives the storage medium.

The aforementioned navigation device 1 is configured to provide optimal course guidance up to a destination by displaying the map data read out from the storage medium 2 on a monitor 4 together with a position of the vehicle which is detected accordingly by a GPS receiver 5 and such. The configuration to provide such optimal course guidance is described next.

The aforementioned navigation device 1 has a global positioning system (GPS) receiver 5 which receives GPS signals emitted from GPS satellites. The GPS signals are ordinary received in every other second and fed to the controller 3. The controller 3 analyzes the signals from GPS satellites received by the GPS receiver 5 to obtain information such as a position (latitude and longitude), a traveling direction and a traveling speed of the vehicle.

The aforementioned navigation device 1 has a direction sensor 6 which detects a traveling direction of the vehicle or changes of its traveling direction. The direction sensor 6 is configured by, for example, a gyro sensor, a geomagnetic sensor, an optical rotation sensor or a rotational variable resistor attached to a rotating section of the steering wheel, and an angle sensor attached to a wheel. The direction sensor 6 outputs its detecting results to the controller 3.

The aforementioned navigation device 1 has a distance sensor 7 which detects a moving distance and a traveling speed of the vehicle. The distance sensor 7 is configured by, for example, a traveling speed pulse sensor which outputs pulsed signals in every given amount of rotation of a drive shaft, a wheel and such of the vehicle, and a yaw or acceleration sensor which detects an acceleration speed of the vehicle with a circuit to double integrate the acceleration speed detected. The distance sensor 7 outputs its detecting results to the controller 3.

The controller 3 in the aforementioned navigation device 1 obtains map data relating to the map information of a neighboring area of the vehicle position from the storage medium 2, executes various arithmetic processes for course guidance of the vehicle according to the map data and the current position of the vehicle as specified by the above, and outputs control instructions for the monitor 4 and such. The aforementioned controller 3 displays a map image produced based on the aforementioned map data with an image which represents the current position of the vehicle superposed on top of the map image on the monitor 4. The controller 3 informs a driver of the course guidance in precise timing based on the road geometry and such contained in the map data relating to the map information of the traveling direction and the current position of the vehicle using the monitor 4 and such.

The aforementioned navigation device 1 is configured to display the information data relating to spot information retrieved from the storage medium 2 on the monitor 4 and to give search guidance of spot information. The configuration to provide such search guidance of spot information is described next.

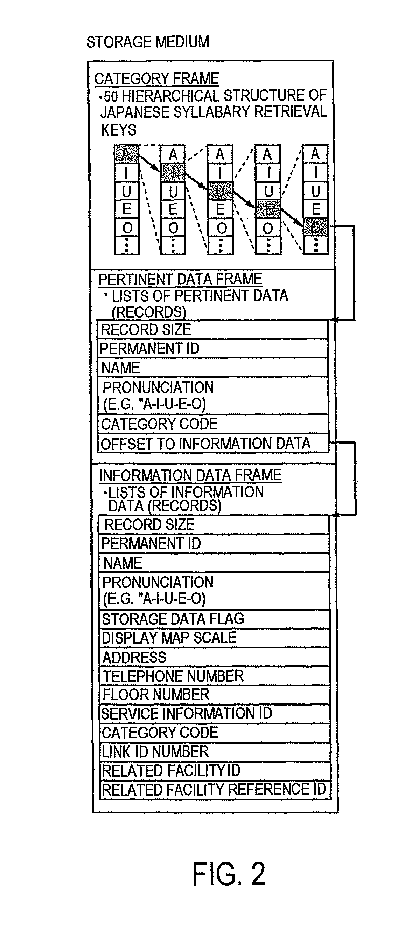

The aforementioned storage medium 2 stores, as indicated in FIG. 2, a plurality of information data relating to a plurality of spot information in an information data frame and pertinent data to specify the information data in a pertinent data frame for each category specified by retrieval keys of spot names represented in 50 syllables of the Japanese language, in this example.

More specifically, the aforementioned information data frame stores lists of information data in spot record units. The information data includes a record size which represents the size of a record, a permanent ID which remains unchanged for the record as well as various types of information such as a name of a spot, its pronunciation in the Japanese syllabary which is the aforementioned retrieval keys, and a telephone number and an address of the spot.

Meanwhile, the aforementioned pertinent data frame stores lists of pertinent data in spot record units for each category which is described later. The pertinent data includes a record size which represents the size of a record, a permanent ID which remains unchanged for the record, as well as various types of information such as a name of a spot, its pronunciation in the Japanese syllabary which is the aforementioned retrieval keys, and an offset to information data to specify the information data.

The aforementioned storage medium 2 has a category frame which defines the categories in the aforementioned pertinent data frame. Specifically, the category frame stores the hierarchical structure of retrieval keys of the Japanese syllabary representing 50 syllables hierarchized in a plurality of levels. The categories are in a hierarchical structure, as each level of the hierarchy represents one category.

The aforementioned controller 3, when providing search guidance by the retrieval keys which represent a pronunciation of a spot name, initiated by a user entering the pronunciation through a predefined operating section such as the monitor 4 with a touch panel, references the hierarchical structure of categories stored in the category frame; specifies the category by the pronunciation entered; extracts pertinent data in the specified category from the pertinent data frame; and displays the name of the spot and such contained in the extracted pertinent data on the monitor 4.

The aforementioned controller 3, when the user selects the aforementioned displayed name of the spot on the monitor 4 with the touch panel, references the offset to the information data contained in the pertinent data corresponding to the selected name of the spot; extracts the information data corresponding to the name of the spot from the information data frame; and displays the detailed information of the spot and map data and such of the spot contained in the extracted information data on the monitor 4.

The navigation device 1 has a communication section 10 which receives a predefined file from a later described deliver server 20 via a predefined communication line I such as the Internet. The communication section 10 functions, whose details are described later, as an updating file input terminal which accepts an entry of an updating file to update pertinent data and information data stored in the storage medium 2, which data received from the aforementioned delivery server 20 via the communication line I.

The aforementioned delivery server 20 is set up on the side of a manufacturer and such that markets the navigation device 1 and is composed of a computer which stores and manages the information data frame storing the latest information data to be stored in the storage medium 2 of the navigation device 1 in a storage device 30 such as a hard disk. The delivery server 20 is configured to extract the information data frame containing the latest information data updated in the storage device 30, and to transmit the file containing the extracted information data frame as the updating file to the navigation device 1 accessed via the communication line I.

The controller 3 of the navigation device 1 is configured to provide updating functions to update the data stored in the storage medium 2 by reading and writing desired data from and in the storage medium 2 by using the updating file received by the aforementioned communication section 10, specifically as an information data updating section 8 to update information data and as a pertinent data updating section 9 to update pertinent data.

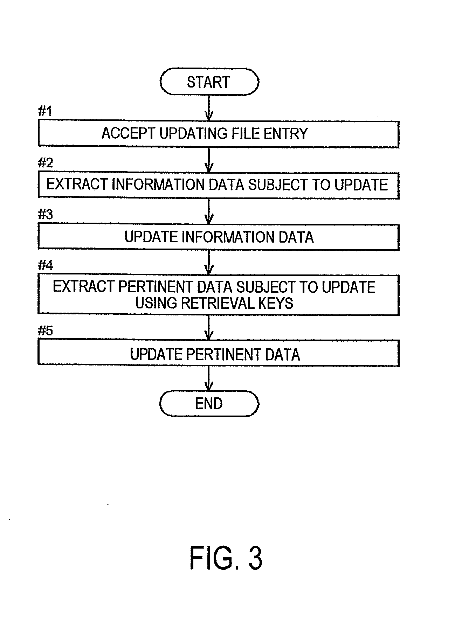

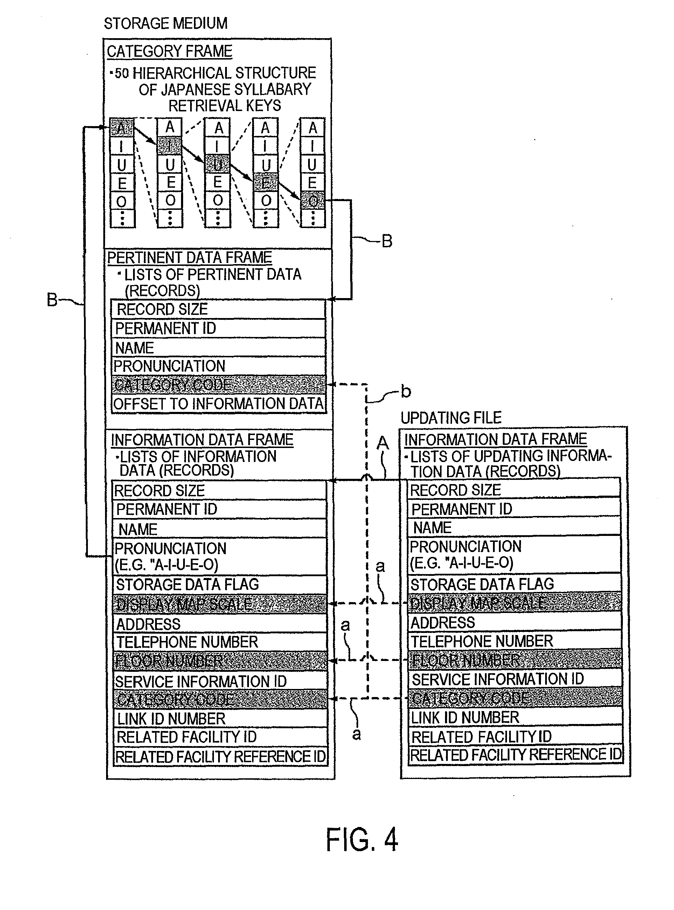

The detailed configurations of the information data updating section 8 and the pertinent data updating section 9 as updating functions as well as a flow of a data updating method executed by these various measures are described with reference to FIGS. 3 and 4.

FIG. 3 is a flowchart of the process of a method for updating data and FIG. 4 is an illustration showing an updating flow of the storage medium by using the updating file.

The navigation device 1, with the execution of an updating file entry step (step #1) accepting an entry of an updating file received by the aforementioned communication section 10, starts executing the method for updating data.

The updating file received by the communication section 10 is a file containing the whole information data frame storing the updating information data which is the latest information data to be stored in the storage medium 2 and is a file of a relatively small capacity as the latest pertinent data is not included.

The aforementioned information data updating section 8 is configured to execute information data updating steps of extracting the information data subject to update from the information data frame stored in the storage medium 2 (step #2) and of updating the extracted information data with the updating information data contained in the aforementioned updating file (step #3).

More specifically, in the aforementioned information data updating steps, as indicated by the arrow A in FIG. 4, the information data updating section 8 extracts the information data of the whole information data frame corresponding to the information data frame contained in the updating file as the subject to update from the storage medium 2. As indicated by the arrow a in FIG. 4, the information data updating section 8 then updates the information data by comparing the information data subject to update and the updating information data contained in the updating file, and by renewing fields in the information data subject to update which differ from those in the updating information data contained in the aforementioned updating file (i.e., "map display scale", "floor number", and "category code" shown in FIG. 4) with fields corresponding to the updating information data.

The aforementioned pertinent data updating section 9 is configured to execute pertinent data updating steps of extracting the pertinent data in the category specified by the retrieval keys contained in the aforementioned information data subject to update from the pertinent data frame stored in the storage medium 2 (step #4) and of updating the extracted pertinent data with the updating information data contained in the aforementioned updating file (step #5).

More specifically, in the aforementioned pertinent data updating steps, as indicated by the arrow B in FIG. 4, the pertinent data updating section 9 references the retrieval keys, specifically the pronunciation of a spot name ("A-I-U-E-O", for example), contained in the information data updated by the aforementioned information data updating section and extracts the pertinent data, as the subject to update, in the category specified by the retrieval keys referenced in the category frame from the pertinent data frame. As indicated by the arrow b in FIG. 4, the pertinent data updating section 9 then updates the pertinent data by comparing the pertinent data subject to update and the updating information data contained in the updating file and by renewing fields in the pertinent data subject to update which differ from those in the updating information data contained in the aforementioned updating file (i.e., "category code" shown in FIG. 4) with fields corresponding to the updating information data.

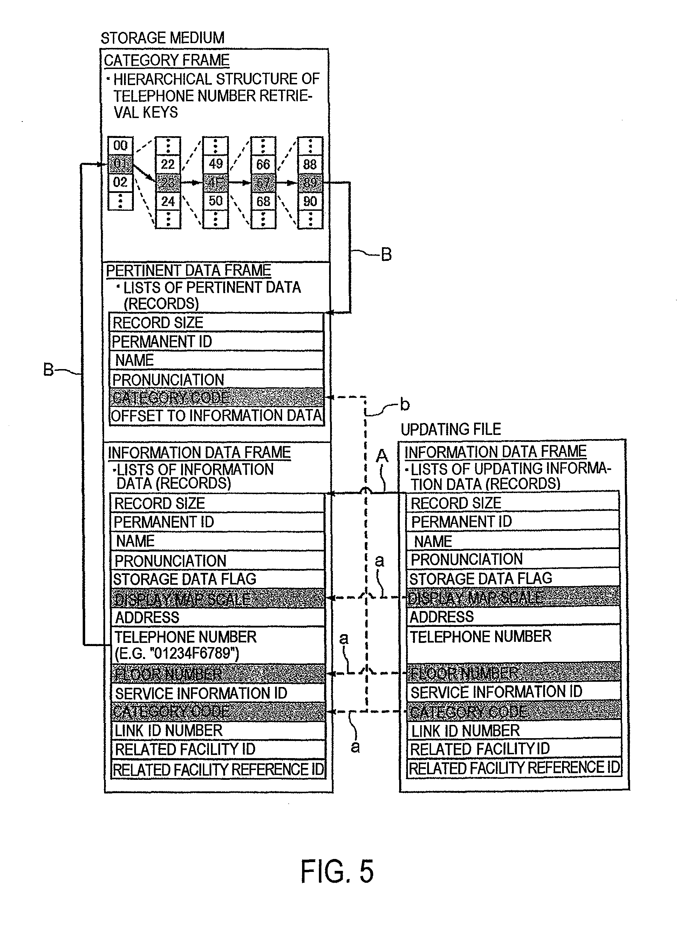

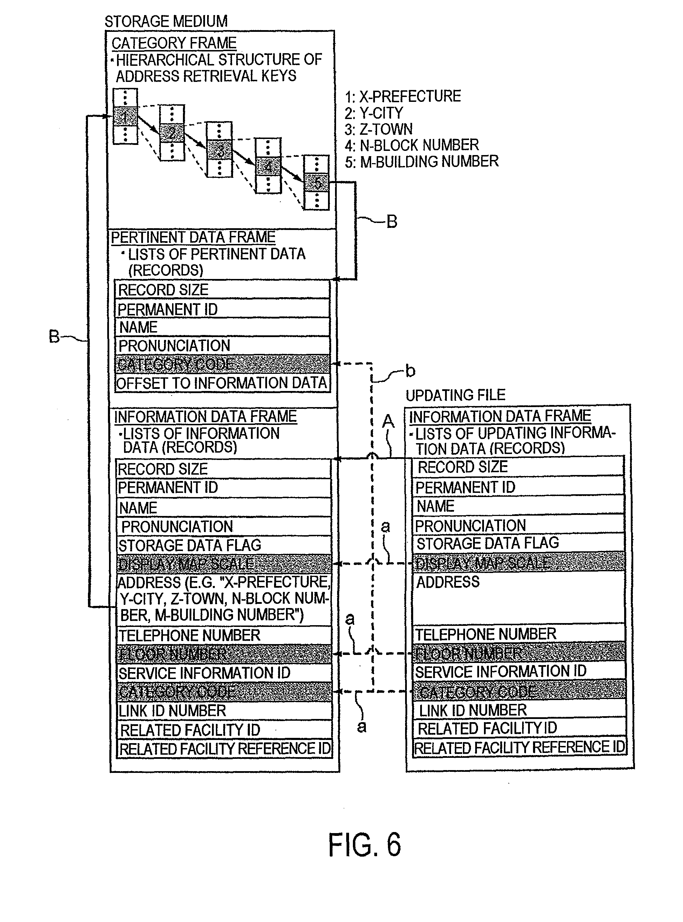

By the method for updating data described above, both pertinent data and information data stored in the storage medium 2 can be updated by using a file of a relatively small capacity, as the aforementioned updating file, containing only updating information data for updating the information data without including data for updating the pertinent data. This method therefore makes it possible, for example, to reduce the volume of communication and memory capacity for an entry of the updating file made by the updating file input terminal and to reduce the updating time required for executing the method for updating data. Other Preferred Embodiments
(1) In the first embodiment, the pertinent data updating section 9, when executing the pertinent data updating steps, uses a pronunciation of a spot name contained in the information data as retrieval keys to specify the category to which the pertinent data subject to update belongs. However, the retrieval keys to specify the category to which the pertinent data subject to update belongs are not limited to the pronunciation, and other information contained in the information data, for example, a spot telephone number and address can serve as the retrieval keys.
   The method for updating data using a spot telephone number as the retrieval keys to specify the category to which the aforementioned pertinent data subject to update belongs is as follows.
   As indicated in FIG. 5, similar to the information data updating steps described in the aforementioned embodiment, and as indicated by the arrow A in FIG. 5, the information data updating section 8 extracts the information data subject to update from the storage medium 2 and, as indicated by the arrow a in FIG. 5, updates the information data by renewing fields in the information data subject to update which differ from those in the updating information data contained in the updating file (i.e., "map display scale", "floor number", and "category code" shown in FIG. 5) with fields corresponding to the updating information data. In the aforementioned pertinent data updating steps, as indicated by the arrow B in FIG. 5, the pertinent data updating section 9 references the retrieval key, specifically a spot telephone number ("01234F6789", for example, whereas an "F" at the 6th digit from the left is an invalid value when the telephone number is of 9 digits), contained in the information data updated by the aforementioned information data updating section, extracts the pertinent data, as the subject to update, in the category specified by the retrieval keys referenced in the category frame from the pertinent data frame, and updates the pertinent data by renewing fields in the pertinent data subject to update which differ from those in the updating information data contained in the updating file (i.e., "category code" shown in FIG. 5) with fields corresponding to the updating information data.
   The method for updating data using a spot address as the retrieval keys to specify the category to which the aforementioned pertinent data subject to update belongs is as follows.
   As indicated in FIG. 6, similar to the information data updating steps described in the aforementioned embodiment, and as indicated by the arrow A in FIG. 6, the information data updating section 8 extracts the information data subject to update from the storage medium 2 and, as indicated by the arrow a in FIG. 6, updates the information data by renewing fields in the information data subject to update which differ from those in the updating information data contained in the updating file (i.e., "map display scale", "floor number", and "category code" shown in FIG. 6) with fields corresponding to the updating information data. In the aforementioned pertinent data updating steps, as indicated by the arrow B in FIG. 6, the pertinent data updating section 9 references the retrieval key, specifically a spot address (for example, "X-prefecture, Y-city, Z-town, N-block number, M-building number"), contained in the information data updated by the aforementioned information data updating section, extracts the pertinent data, as the subject to update, in the category specified by the retrieval keys referenced in the category frame, and updates the pertinent data by renewing fields in the pertinent data subject to update which differ from those in the updating information data contained in the updating file (i.e., "category code" shown in FIG. 6) with fields corresponding to the updating information data.
(2) In the first embodiment, the category of retrieval keys is configured in a hierarchical structure. However, the category may be defined, for example, as a single category for a single retrieval key, without having a hierarchical structure.
(3) In the first embodiment, the updating file input terminal is configured with the communication section 10 which receives an entry of an updating file from the delivery server 20 via the communication line I. However, alterations and modifications may be applied to the updating file input terminal, for example, to be configured to enable input of the updating file via a communication line such as USB directly from the delivery server, or to enable input of the updating file via a communication line such as USB from a mobile telephone and other media with which the updating file has been downloaded from the delivery server.
(4) While the data management system according to the first embodiment of the present invention is applied to the navigation device 1 storing data relating to spot information as information data in the storage medium 2, it may as well be applied to systems in other configurations such as a management system of various databases, such as a spot search database and a map database, which provide a search function.

The data management system and the method for updating data according to the above-described embodiments of the present invention can be used effectively, for example in a navigation device for updating pertinent data and information data stored in its storage medium to reduce the capacity of an updating file used for updating as much as possible.

With a retrieval key to specify a category included in information data, the information data is updated by accepting an entry of an updating file which contains updating information data for updating the information data subject to update; extracting the information data subject to update from an information data frame; updating the extracted information data with the updating information data contained in the updating file: extracting pertinent data in the category specified by the retrieval key contained in the information data subject to update from a pertinent data frame; and updating the extracted pertinent data with the updating information data contained in the updating file.
FIG. 1
1 NAVIGATION DEVICE
2 STORAGE MEDIUM
3 CONTROLLER
5 GPS RECEIVER
6 DIRECTION SENSOR
7 DISTANCE SENSOR
8 INFORMATION DATA UPDATING SECTION
9 PERTINENT DATA UPDATING SECTION
10 COMMUNICATION SECTION
20 DELIVERY SERVER
30 STORAGE DEVICE

FIG. 2
Z1 STORAGE MEDIUM
Z2 CATEGORY FRAME
Z3 HIERARCHICAL STRUCTURE OF JAPANESE SYLLABARY RETRIEVAL KEYS
Z4 A
Z5 I
Z6 U
Z7 E
Z8 O
Z9 PERTINENT DATA FRAME
Z10 LISTS OF PERTINENT DATA (RECORDS)
Z11 RECORD SIZE
Z12 PERMANENT ID
Z13 NAME
Z14 PRONUNCIATION (E.G. "A-I-U-E-O")
Z15 CATEGORY CODE
Z16 OFFSET TO INFORMATION DATA
Z17 INFORMATION DATA FRAME
Z18 LISTS OF INFORMATION DATA (RECORDS)
Z19 RECORD SIZE
Z20 PERMANENT ID
Z21 NAME
Z22 PRONUNCIATION (E.G. "A-I-U-E-O")
Z23 STORAGE DATA FLAG
Z24 DISPLAY MAP SCALE
Z25 ADDRESS
Z26 TELEPHONE NUMBER
Z27 FLOOR NUMBER
Z28 SERVICE INFORMATION ID
Z29 CATEGORY CODE
Z30 LINK ID NUMBER
Z31 RELATED FACILITY ID
Z32 RELATED FACILITY REFERENCE ID

FIG. 3
Z33 START
#1 ACCEPT UPDATING FILE ENTRY
#2 EXTRACT INFORMATION DATA SUBJECT TO UPDATE
#3 UPDATE INFORMATION DATA
#4 EXTRACT PERTINENT DATA SUBJECT TO UPDATE USING RETRIEVAL
KEYS
#5 UPDATE PERTINENT DATA
Z34 END

FIG. 4
Z35 STORAGE MEDIUM
Z36 CATEGORY FRAME
Z37 HIERARCHICAL STRUCTURE OF JAPANESE SYLLABARY RETRIEVAL KEYS
Z38 A
Z39 I
Z40 U
Z41 E
Z42 O
Z43 PERTINENT DATA FRAME
Z44 LISTS OF PERTINENT DATA (RECORDS)
Z45 RECORD SIZE
Z46 PERMANENT ID
Z47 NAME
Z48 PRONUNCIATION
Z49 CATEGORY CODE
Z50 OFFSET TO INFORMATION DATA
Z51 INFORMATION DATA FRAME
Z52 LISTS OF INFORMATION DATA (RECORDS)
Z53 RECORD SIZE
Z54 PERMANENT ID
Z55 NAME
Z56 PRONUNCIATION (E.G. "A-I-U-E-O")
Z57 STORAGE DATA FLAG
Z58DISPLAY MAP SCALE
Z59 ADDRESS
Z60 TELEPHONE NUMBER
Z61 FLOOR NUMBER
Z62 SERVICE INFORMATION ID
Z63 CATEGORY CODE
Z64 LINK ID NUMBER
Z65 RELATED FACILITY ID
Z66 RELATED FACILITY REFERENCE ID
Z67 UPDATING FILE
Z68 INFORMATION DATA FRAME
Z69 LISTS OF UPDATING INFORMATION DATA (RECORDS)
Z70 RECORD SIZE
Z71 PERMANENT ID
Z72 NAME
Z73 PRONUNCIATION (E.G. "A-I-U-E-O")
Z74 STORAGE DATA FLAG
Z75 DISPLAY MAP SCALE
Z76 ADDRESS
Z77 TELEPHONE NUMBER
Z78 FLOOR NUMBER
Z79 SERVICE INFORMATION ID
Z80 CATEGORY CODE
Z81 LINK ID NUMBER
Z82 RELATED FACILITY ID
Z83 RELATED FACILITY REFERENCE ID

FIG. 5
Z84 STORAGE MEDIUM
Z85 CATEGORY FRAME
Z86 HIERARCHICAL STRUCTURE OF TELEPHONE NUMBER RETRIEVAL KEYS
Z87 PERTINENT DATA FRAME
Z88 LISTS OF PERTINENT DATA (RECORDS)
Z89 RECORD SIZE
Z90 PERMANENT ID
Z91 NAME
Z92 PRONUNCIATION
Z93 CATEGORY CODE
Z94 OFFSET TO INFORMATION DATA
Z95 INFORMATION DATA FRAME
Z96 LISTS OF INFORMATION DATA (RECORDS)
Z97 RECORD SIZE
Z98 PERMANENT ID
Z99 NAME
Z100 PRONUNCIATION
Z101 STORAGE DATA FLAG
Z102 DISPLAY MAP SCALE
Z103 ADDRESS
Z104 TELEPHONE NUMBER (E.G. "01234F6789")
Z105 FLOOR NUMBER
Z106 SERVICE INFORMATION ID
Z107 CATEGORY CODE
Z108 LINK ID NUMBER
Z109 RELATED FACILITY ID
Z110 RELATED FACILITY REFERENCE ID
Z111 UPDATING FILE
Z112 INFORMATION DATA FRAME
Z113 LISTS OF UPDATING INFORMATION DATA (RECORDS)
Z114 RECORD SIZE
Z115 PERMANENT ID
Z116 NAME
Z117 PRONUNCIATION
Z118 STORAGE DATA FLAG
Z119 DISPLAY MAP SCALE
Z120 ADDRESS
Z121 TELEPHONE NUMBER
Z122 FLOOR NUMBER
Z123 SERVICE INFORMATION ID
Z124 CATEGORY CODE
Z125 LINK ID NUMBER
Z126 RELATED FACILITY ID
Z127 RELATED FACILITY REFERENCE ID

FIG. 6
Z128 STORAGE MEDIUM
Z129 CATEGORY FRAME
Z130 HIERARCHICAL STRUCTURE OF ADDRESS RETRIEVAL KEYS
Z131 X-PREFECTURE
Z132 Y-CITY
Z133 Z-TOWN
Z134 N-BLOCK NUMBER
Z135 M-BUILDING NUMBER
Z136 PERTINENT DATA FRAME
Z137 LISTS OF PERTINENT DATA (RECORDS)
Z138 RECORD SIZE
Z139 PERMANENT ID
Z140 NAME
Z141 PRONUNCIATION
Z142 CATEGORY CODE
Z143 OFFSET TO INFORMATION DATA
Z144 INFORMATION DATA FRAME
Z145 LISTS OF INFORMATION DATA (RECORDS)
Z146 RECORD SIZE
Z147 PERMANENT ID
Z148 NAME
Z149 PRONUNCIATION
Z150 STORAGE DATA FLAG
Z151 DISPLAY MAP SCALE
Z152 ADDRESS (E.G. "X-PREFECTURE, Y-CITY, Z-TOWN, N-BLOCK NUMBER, M-BUILDING NUMBER")
Z153 TELEPHONE NUMBER
Z154 FLOOR NUMBER
Z155 SERVICE INFORMATION ID
Z156 CATEGORY CODE
Z157 LINK ID NUMBER
Z158 RELATED FACILITY ID
Z159 RELATED FACILITY REFERENCE ID
Z160 UPDATING FILE
Z161 INFORMATION DATA FRAME
Z162 LISTS OF UPDATING INFORMATION DATA (RECORDS)
Z163 RECORD SIZE
Z164 PERMANENT ID
Z165 NAME
Z166 PRONUNCIATION
Z167 STORAGE DATA FLAG
Z168 DISPLAY MAP SCALE
Z169 ADDRESS
Z170 TELEPHONE NUMBER
Z171 FLOOR NUMBER
Z172 SERVICE INFORMATION ID
Z173 CATEGORY CODE
Z174 LINK ID NUMBER
Z175 RELATED FACILITY ID
Z176 RELATED FACILITY REFERENCE ID

FIG. 7
Z177 START
#11 ACCEPT UPDATING FILE ENTRY
#12 EXTRACT INFORMATION DATA SUBJECT TO UPDATE
#13 UPDATE INFORMATION DATA
#14 EXTRACT PERTINENT DATA SUBJECT TO UPDATE
#15 UPDATE PERTINENT DATA
Z178 END

FIG. 8
Z179 STORAGE MEDIUM
Z180 PERTINENT DATA FRAME
Z181 LISTS OF PERTINENT DATA (RECORDS)
Z182 RECORD SIZE
Z183 PERMANENT ID
Z184 NAME
Z185 PRONUNCIATION
Z186 CATEGORY CODE
Z187 OFFSET TO INFORMATION DATA
Z188 INFORMATION DATA FRAME
Z189 LISTS OF INFORMATION DATA (RECORDS)
Z190 RECORD SIZE
Z191 PERMANENT ID
Z192 NAME
Z193 PRONUNCIATION (E.G. "A-I-U-E-O")
Z194 STORAGE DATA FLAG
Z195 DISPLAY MAP SCALE
Z196 ADDRESS
Z197 TELEPHONE NUMBER
Z198 FLOOR NUMBER
Z199 SERVICE INFORMATION ID
Z200 CATEGORY CODE
Z201 LINK ID NUMBER
Z202 RELATED FACILITY ID
Z203 RELATED FACILITY REFERENCE ID
Z204 UPDATING FILE
Z205 PERTINENT DATA FRAME
Z206 LISTS OF UPDATING PERTINENT DATA (RECORDS)
Z207 RECORD SIZE
Z208 PERMANENT ID
Z209 NAME
Z210 PRONUNCIATION
Z211 CATEGORY CODE
Z212 OFFSET TO INFORMATION DATA
Z213 INFORMATION DATA FRAME
Z214 LISTS OF UPDATING INFORMATION DATA (RECORDS)
Z215 RECORD SIZE
Z216 PERMANENT ID
Z217 NAME
Z218 PRONUNCIATION (E.G. "A-I-U-E-O")
Z219 STORAGE DATA FLAG
Z220 DISPLAY MAP SCALE
Z221 ADDRESS
Z222 TELEPHONE NUMBER
Z223 FLOOR NUMBER
Z224 SERVICE INFORMATION ID
Z225 CATEGORY CODE
Z226 LINK ID NUMBER
Z227 RELATED FACILITY ID
Z228 RELATED FACILITY REFERENCE ID

## Claims

1. A data management system (1) comprising:
a storage medium (2) storing a plurality of information data in an information data frame and storing pertinent data specifying the information data in a pertinent data frame for each individual category specified by a retrieval key, the information data including the retrieval key to specify the category;
an updating unit (8, 9) updating data stored in the storage medium by reading and writing desired data from and in the storage medium; and
an updating file input terminal (10) accepting an entry of an updating file containing updating information data for updating information data subject to update; and
the updating unit including:
an information data updating section (8) extracting the information data subject to update from the information data frame, and updating the extracted information data with the updating information data contained in the updating file; and
a pertinent data updating section (9) extracting the pertinent data in the category specified by the retrieval key contained in the information data subject to update from the pertinent data frame, and updating the extracted pertinent data with the updating information data contained in the updating file.

2. The data management system according to claim 1, wherein the updating file input terminal is configured to be able to receive the updating file via a communication line (I).

3. The data management system according to claim 1 or 2, wherein the category has a hierarchical structure.

4. The data management system according to any one of claims 1 to 3, wherein the system is configured as a navigation device storing data related to spot information as the information data in the storage medium (2).

5. The data management system according to claim 4, wherein the retrieval key is at least one of a name pronunciation, telephone number, and address of the spot.

6. A method for updating data stored in a storage medium (2) storing a plurality of information data in an information data frame and storing pertinent data specifying the information data in a pertinent data frame for each category specified by a retrieval key by reading and writing desired data from and in the storage medium, wherein the information data include the retrieval key to specify the category, the method for updating data comprising:
inputting an updating file by accepting (#1) an entry of the updating file containing updating information data for updating information data subject to update;
updating the information data by extracting (#2) the information data subject to update from the information data frame, and by updating (#3) the extracted information data with the updating information data contained in the updating file; and
updating the pertinent data by extracting (#4) the pertinent data in the category specified by the retrieval key contained in the information data subject to update from the pertinent data frame, and by updating (#5) the extracted pertinent data with the updating information data contained in the updating file.
